# DEMANDE DE BREVET EUROPEEN

(11) **EP 4 767 818 A1**
(43) Date de publication de la demande: **01.07.2026**
(21) Numéro de dépôt: 25225346.3
(22) Date de dépôt: 18.12.2025
(51) Int. Cl.: A01K 1/015

(54) **SYSTÈME DE REVÊTEMENT ADAPTÉ À ÊTRE FIXÉ PAR-DESSUS UN SOL CAILLEBOTIS ÉQUIPANT UNE ENCEINTE POUR L'ÉLEVAGE D'ANIMAUX**

(30) Priorité: 27.12.2024 FR 2415316
(71) Demandeur: Group Elastoteck, 44850 Mouzeil (FR)
(72) Inventeur: BIORET, Jean-Vincent, 44390 PETIT MARS (FR)
(74) Mandataire: Jacobacci & Partners France

(57) **Abrégé**

La présente invention concerne un système de revêtement (3) pour un sol caillebotis (2) dans une enceinte (1) pour l'élevage d'animaux, le système comprenant un revêtement (4) et des dispositifs de fixations (5).

Selon l'invention, il est prévu que les dispositifs de fixation comprennent une tête (56) comprenant des moyens de fixations (560) se fixant sur le revêtement et un corps (51), comprenant des moyens de verrouillage (510) aptes à être manœuvrés entre deux positions :
- une position de déblocage, adaptée à autoriser la translation dudit corps par rapport audit conduit d'évacuation, et
- une position de blocage, adaptée à empêcher la translation dudit dispositif de fixation rapporté dans ledit conduit d'évacuation,
laquelle tête comprend des moyens de manœuvre (561), adaptés à la manœuvre desdits moyens de verrouillage entre lesdites deux positions.

## Description

### Domaine technique de l'invention

La présente invention concerne le domaine technique des revêtements destinés à recouvrir un sol d'une enceinte pour l'élevage d'animaux, par exemple de bovins. Plus particulier, la présente invention concerne un système de revêtement adapté à être fixé par-dessus un sol caillebotis équipant une enceinte pour l'élevage d'animaux.

### Etat de la technique

Le confort des animaux constitue un paramètre déterminant dans le rendement d'un élevage, qui influence notamment la santé, la prise alimentaire, la fertilité et la longévité des animaux.

En étable, ce confort implique notamment une évacuation rapide et efficace des déjections générées par les animaux.

Cette gestion des déjections doit en effet permettre de réduire les émanations de gaz et la prolifération de bactéries dans l'enceinte d'élevage, et par conséquent d'améliorer les conditions d'ambiance et les performances sanitaires.

Plus généralement, un revêtement de sol excessivement humide est susceptible de provoquer des problèmes sanitaires au niveau des pieds des animaux, notamment de boiteries, constituant un trouble majeur de santé en élevage.

Une solution consiste alors à équiper les zones de circulation des animaux (aires d'attente, couloirs d'exercice, etc.) avec un sol caillebotis (généralement constitué de plaques de béton préfabriquées), puis de recouvrir celui-ci d'un revêtement sur lequel les pieds des animaux viennent prendre appui. Ce revêtement améliore le confort des animaux, et permet aussi de réduire l'humidité des sols.

Le maintien du revêtement, par rapport au sol caillebotis, constitue un enjeu essentiel.

En effet, il est nécessaire de bloquer la position du revêtement par rapport au sol caillebotis, afin de permettre une bonne évacuation des fluides.

Les moyens de maintien doivent en outre éviter d'entrer en contact avec les onglons des animaux, afin de limiter leur usure excessive et/ou d'éviter les blessures.

### Présentation de l'invention

Afin de remédier à l'inconvénient précité de l'état de la technique, la présente invention propose un système de revêtement dans lequel le revêtement est associé à des dispositifs de fixation qui sont rapportés au niveau de conduits d'évacuation définis dans le sol caillebotis et le revêtement, de manière à ancrer le revêtement à une position fixe par rapport à ce sol caillebotis.

Plus particulièrement, on propose selon l'invention un système de revêtement adapté à être fixé par-dessus un sol caillebotis équipant une enceinte pour l'élevage d'animaux, le système de revêtement comprenant :
- un revêtement destiné à recouvrir le sol caillebotis, avantageusement un tapis réalisé dans un matériau élastomère, et
- une pluralité de dispositifs de fixation, destinés à assurer la solidarisation du revêtement avec le sol caillebotis ;
lequel revêtement comporte :
- une surface inférieure, destinée à prendre appui sur le sol caillebotis, et
- une surface supérieure, opposée,
lequel revêtement comprend plusieurs fentes, traversantes, destinées à venir en communication fluidique avec au moins une ouverture ménagée dans le sol caillebotis, pour définir ensemble un conduit d'évacuation adapté à l'évacuation des liquides depuis la surface supérieure du revêtement.

Et, toujours selon l'invention, l'un au moins des dispositifs de fixation comprend :
- un corps adapté à être introduit en translation dans le conduit d'évacuation, depuis la surface supérieure du revêtement, et
- une tête, comprenant des moyens de fixation adaptés à une fixation sur la surface supérieure du revêtement,
lequel corps comprend des moyens de verrouillage aptes à être manœuvrés entre deux positions :
- une position de déblocage, adaptée à autoriser la translation du corps par rapport au conduit d'évacuation, et
- une position de blocage, adaptée à empêcher la translation du dispositif de fixation rapporté dans le conduit d'évacuation,
laquelle tête comprend des moyens de manœuvre, adaptés à la manœuvre des moyens de verrouillage entre les deux positions.

Ainsi, grâce à l'invention, il est possible de fixer un revêtement sur un sol caillebotis.

Les dispositifs de fixation prévus à cet effet maintiennent le revêtement dans une position fixe par rapport au sol caillebotis et empêchent le revêtement de bouger.

Le placement du dispositif de fixation au sein du conduit d'évacuation permet en outre de s'assurer d'une bonne concordance entre les fentes du revêtement et les ouvertures du sol caillebotis, garantissant une bonne évacuation des fluides.

De plus, cet agencement des dispositifs de fixation permet avantageusement de réduire des contacts possibles avec les onglons des animaux.

En outre, le dispositif de fixation est facilement manœuvrable par un opérateur entre la position de déblocage et la position de blocage puisque les moyens de manœuvre sont accessibles depuis la surface supérieure du revêtement.

D'autres caractéristiques non limitatives et avantageuses du produit conforme à l'invention, prises individuellement ou selon toutes les combinaisons techniquement possibles, sont les suivantes :
- La surface supérieure du revêtement comportant plusieurs rainures longitudinales adaptées à recevoir les liquides s'écoulant sur ladite surface supérieure,
   lesquels rainures longitudinales sont coupées par lesdites fentes, lesquelles moyens de fixation de la tête sont adaptés à être logés dans lesdites rainures, avantageusement sans faire saillie par rapport à ladite surface supérieure, de préférence, la cote en largeur desdits moyens de fixation est inférieure à la cote en largeur de ladite rainure longitudinale, et de préférence, les rainures longitudinales s'étendent perpendiculairement par rapport auxdits fentes ;
- Les moyens de fixation de la tête comprennent deux pattes s'étendant de part et d'autre dudit corps et adaptées à s'ancrer au niveau de ladite surface supérieure du revêtement, de part et d'autre de la fente, le cas échéant dans la rainure longitudinale, lesquelles pattes comportent avantageusement au moins un crochet apte à s'enfoncer dans le revêtement ;
- La tête du dispositif de fixation comporte un renfoncement dans lequel sont accessibles les moyens de manœuvre ;
- Les moyens de manœuvre comprennent une vis comprennent une tête de vis qui est accessible depuis la tête du dispositif de fixation, et un corps de vis qui coopère avec lesdits moyens de verrouillage ;
- Les moyens de verrouillage consistent en des moyens de verrouillage en expansion, lesquels moyens de verrouillage sont manœuvrables entre les deux positions : la position de déblocage, définissant une première cote en largeur autorisant sa manœuvre en translation par rapport au conduit d'évacuation, et la position de blocage, définissant une seconde cote en largeur, supérieure à la première cote en largeur, adaptée à empêcher sa manœuvre en translation par rapport au conduit d'évacuation ;
- Les moyens de verrouillage en expansion comprennent une partie déformable comprenant deux aile déformables élastiquement, en écartement, qui s'étendent de part et d'autre d'un axe longitudinal et définissant un logement s'ouvrant à l'opposé de ladite tête ; de préférence, lequel logement reçoit un élément déformant qui est manœuvrable au sein du logement pour ajuster l'écartement des deux aile ; de préférence encore, les ailes et/ou l'élément déformant présentent une forme évasée, lequel élément déformant est manœuvrable en translation le long du logement pour définir les positions ;

La présente invention concerne encore un dispositif de fixation, en tant que tel, pour un système de revêtement selon l'invention.

Ce dispositif de fixation comprend :
- un corps adapté à être introduit en translation dans ledit conduit d'évacuation, depuis la surface supérieure dudit revêtement, et
- une tête, comprenant des moyens de fixation adaptés à une fixation sur la surface supérieure dudit revêtement,
lequel corps comprend des moyens de verrouillage aptes à être manœuvrés entre deux positions :
- une position de déblocage, adaptée à autoriser la translation dudit corps par rapport au conduit d'évacuation, et
- une position de blocage, adaptée à empêcher la translation du corps par rapport au conduit d'évacuation,
laquelle tête comprend des moyens de manœuvre, adaptés à la manœuvre desdits moyens de verrouillage entre lesdites deux positions.

La présente invention concerne encore une enceinte pour l'élevage d'animaux comprenant un sol caillebotis recevant un système de revêtement selon l'invention.

Enfin, la présente invention concerne également un procédé de mise en place d'un système de revêtement selon l'invention, le procédé comprenant les étapes suivantes :
- une étape de pose du revêtement de sorte à recouvrir le sol caillebotis et de sorte que les fentes dudit revêtement soient en communication fluidique avec au moins une ouverture du sol caillebotis pour former un conduit d'évacuation,
- une étape d'insertion du dispositif de fixation dans le conduit d'évacuation, avec ses moyens de verrouillage en position de déblocage, de sorte à prendre en sandwich le revêtement entre la tête et le sol caillebotis, et
- une étape de manoeuvre des moyens de verrouillage du dispositif de fixation depuis ladite position de déblocage vers la position de blocage.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue générale et en perspective d'une enceinte adaptée à l'élevage d'animaux conforme à l'invention, présentant un sol caillebotis recouvert d'un système de revêtement comprenant un revêtement maintenu à l'aide de dispositifs de fixation ;
[Fig. 2] est une vue isolée et en perspective d'un des dispositifs de fixation, dans une position de déblocage ;
[Fig. 3] est une vue isolée et en perspective d'un des dispositifs de fixation de la figure 1, dans une position de déblocage (A) et dans une position de blocage (B) ;
[Fig. 4] est une vue partielle du dessus du revêtement et du dispositif de fixation de la figure 1 ;
[Fig. 5] est une vue en perspective du système de revêtement de la figure 1 ;
[Fig. 6] est une vue selon une coupe du sol caillebotis recouvert du revêtement de la figure 1, avec le dispositif de fixation dans la position de déblocage ;
[Fig. 7] est une vue selon une coupe du sol caillebotis recouvert du revêtement de la figure 1, avec le dispositif de fixation dans la position de blocage.

Il est à noter que, sur ces figures, les éléments structurels et/ou fonctionnels communs aux différentes variantes peuvent présenter les mêmes références.

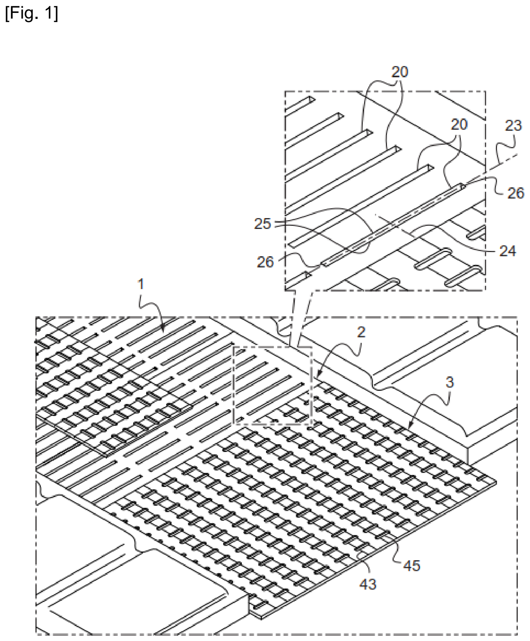

La figure 1 représente de manière schématique une enceinte 1 adaptée à l'élevage d'animaux.

Par « animaux », on entend par exemple des bovins (en particulier les vaches laitières, ou les bovins à viande), des porcins, ou tout autre animal d'élevage (ovin, volaille, lapin, cheval, etc.)
Cette enceinte 1, partiellement représentée sur la figure 1, consiste avantageusement en un bâtiment délimité par un bâti (non représenté), adapté à l'élevage souhaité. Par exemple, dans le cas d'un élevage de bovins, il s'agit d'une étable.

Cette enceinte 1 comprend un sol caillebotis 2, par exemple installé dans une zone de circulation. La zone de circulation comprend par exemple une aire d'attente, un couloir d'exercice, un couloir de circulation, etc. Dans ce premier exemple, le sol caillebotis 2 est implanté au niveau de couloirs de circulations, empruntés par les animaux lorsqu'ils cheminent entre les différents espaces fonctionnels de l'enceinte 1 (par exemple, logettes, salles de traites, etc.).

Afin de faciliter l'évacuation des liquides vers la fosse en contrebas, mais également pour améliorer le confort des animaux en limitant le risque de glissades et/ou de blessures, la présente invention propose une solution technique pour recouvrir le sol caillebotis 2 à l'aide d'un système de revêtement 3.

De manière générale, ce système de revêtement 3 selon l'invention comprend :
- un revêtement 4 destiné à recouvrir le sol caillebotis 2, et
- une pluralité de dispositifs de fixation 5, destinés à solidariser le revêtement 4 avec le sol caillebotis 2.

### Sol caillebotis

Ce sol caillebotis 2 désigne en particulier un sol comportant des ouvertures 20 qui débouchent par exemple sur une fosse (non-représenté ici).

Les dimensions des ouvertures 20 permettent un compromis entre un écoulement des liquides et la stabilité des animaux. Ici, par liquide, il est entendu en particulier les déjections liquides produites par les animaux de l'élevage, en particulier, leur urine.

Ce sol caillebotis 2 forme ainsi un plancher ajouré disposé au-dessus d'une fosse, ce qui permet avantageusement de faciliter l'écoulement et l'évacuation des liquides.

Le sol caillebotis 2 comprend avantageusement deux surfaces opposées (figure 1) :
- une surface supérieure 21 orientée vers les animaux, et
- une surface inférieure 22, à l'opposée et orientée vers la fosse.

Les ouvertures 20 du sol caillebotis 2 sont traversantes et débouchent au travers de la surface supérieure 21 et de la surface inférieure 22.

Ces ouvertures 20, de préférence rectilignes, sont délimitées sur la surface supérieure par un contour. Ce contour est de préférence rectangulaire ou oblong.

De préférence, chaque ouverture 20 présente :
- un axe longitudinal 23, selon lequel le contour s'étend en longueur, et
- un axe transversal 24 qui est perpendiculaire à l'axe longitudinal 23 et parallèle à la surface supérieure.

Ainsi, chaque ouverture 20 est délimitée par :
- deux grands côtés 25, dont l'espacement définit une cote en largeur de l'ouverture 20, et
- deux petits côtés 26, dont l'espacement définit une cote en longueur.

Les deux grands côtés 25 s'étendent avantageusement parallèlement à l'axe longitudinal 23. De manière avantageuse, les deux grands côtés 25 s'étendent parallèlement l'un par rapport à l'autre.

Par exemple, les ouvertures 20 présentent avantageusement une cote en largeur de 25 à 42 mm et une cote en longueur de 2000 à 5000 mm.

De préférence, les ouvertures 20 sont régulièrement réparties sur le sol caillebotis 2, et forme un motif périodique. En particulier, les ouvertures 20 sont disposées selon des lignes, dans lesquelles les grands côtés 25 des ouvertures 20 sont dans le prolongement les unes des autres. Le sol caillebotis 2 présentent ainsi des ouvertures 20 disposées selon des lignes régulièrement espacées et parallèles. Au sein d'une même ligne, les ouvertures 20 sont par exemple régulièrement espacées les unes des autres.

De cette manière, les axes longitudinaux 23 des différentes ouvertures 20 du sol caillebotis 2 sont parallèles les uns aux autres.

Chaque ouverture 20 présente une profondeur mesurée selon un axe vertical (non-représenté). Cet axe vertical est défini perpendiculairement à la surface supérieure 21 du sol caillebotis 2. Etant donnée que chaque ouverture 20 est traversante, une profondeur de l'ouverture 20 est donnée par une épaisseur du sol caillebotis 2, mesuré selon cet axe vertical.

En pratique, le sol caillebotis 2 est avantageusement constitué de plusieurs plaques caillebotis, réalisées par exemple en béton.

Ces plaques caillebotis comportent avantageusement un contour carré ou rectangulaire, par exemple :
- une largeur de 500 à 1 200 mm, et
- une longueur de 2 000 à 5 000 mm.

Ces plaques caillebotis du sol caillebotis 2 sont avantageusement juxtaposées, dans le sens de la largeur et/ou de la longueur.

Sur la figure 1, le sol caillebotis 2 constitue avantageusement le sol d'un couloir de circulation qui est délimité par deux bords longitudinaux, définissant sa largeur.

### Revêtement

Le revêtement 4 comprend :
- une surface supérieure 41, sur laquelle les animaux viennent prendre appui et
- une surface inférieure 42, à l'opposé de la surface supérieure 41.

Cette surface inférieure 42 vient s'appuyer sur la surface supérieure 21 du sol caillebotis 2.

Ce revêtement 4 est avantageusement un tapis réalisé dans un matériau élastomère. Le revêtement 4 est ainsi adapté à subir une déformation élastique en enfoncement, lors de l'appui du pied de l'animal ou d'une personne. Par enfoncement, on entend une diminution de l'épaisseur entre la surface supérieure et la surface inférieure du revêtement 4, par rapprochement des deux surfaces lorsqu'une force verticale est exercée.

Par exemple, le revêtement 4 est réalisé en caoutchouc naturel, en caoutchouc « naturel synthétique » (ou poly-isoprène synthétique), ou en polybutadiène ou le styrène - butadiène.

De manière alternative, le revêtement 4 est réalisé dans un matériau élastomères thermoplastiques (TPE), à savoir le PVB (Polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

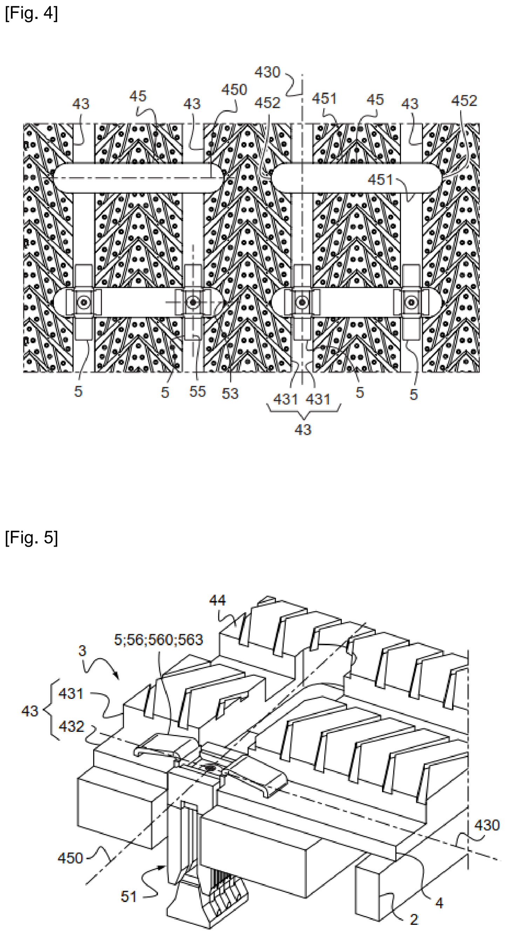

La surface supérieure 41 du revêtement 4 comprend avantageusement des rainures 43 qui sont destinées à recevoir les liquides s'écoulant sur la surface supérieure (figures 4 et 5). Dans une variante possible (non représentée), la surface supérieure 41 du revêtement est dite « plane », c'est-à-dire qu'elle ne comporte pas les rainures 43 précitées.

Par exemple, les rainures 43 sont rectilignes et parallèles. De préférences, les rainures 43 sont équidistantes les unes aux autres sur la surface supérieure 41 du revêtement 4. Chaque rainure 43 définit avantageusement un axe longitudinal 430.

Chaque rainure 43 présente avantageusement une section en forme générale de U, selon une section perpendiculaire à l'axe longitudinal 430, délimitée par :
- deux côtés 431, en regard, par exemple verticaux, et
- un fond 432, par exemple horizontal.

Une distance entre les deux côtés 431 définit une largeur de la rainure 43.

La distance du fond 432, par rapport à la surface supérieure 41 du revêtement 4, définie la profondeur de la rainure 43.

Par exemple, chaque rainure 43 présente une largeur allant de 20 à 30 mm, et une profondeur de 10 à 50 mm.

Des régions entre deux rainures 43 voisines sont appelées des bandes d'appui 44, et présente avantageusement une largeur allant de 100 à 200 mm.

Idéalement, ces bandes d'appui 44 présentent des motifs adaptés à faciliter l'écoulement des liquides vers la fosse et/ou conférer des propriétés anti-dérapantes au revêtement 4.

Pour permettre l'évacuation des fluides depuis le revêtement 4 vers la fosse située en dessous, ce revêtement 4 présente des fentes 45. Ces fentes 45 sont traversantes et débouchent au travers de la surface supérieure 41 et de la surface inférieure 42 du revêtement 4. Ces fentes 45 sont adaptées au passage des liquides s'écoulant sur la surface supérieure 41 du revêtement 4. Ainsi, ces fentes 45 coïncident de manière avantageuse au moins partiellement avec les ouvertures 20 du sol caillebotis 2 sur lequel le revêtement 4 est placé.

La combinaison entre une fente 45 et une ouverture 20 alignée forme un conduit d'évacuation, par lequel le liquide de la surface supérieure 41 du revêtement 4 vient s'évacuer. Ainsi, au moins une partie des fentes 45 est en communication fluidique avec au moins une partie des ouvertures 20.

Ces fentes 45 sont par exemple obtenues par découpage au jeu d'eau dans le revêtement 4.

Selon un mode de réalisation préféré, chaque fente 45 comporte avantageusement un axe longitudinal 450, selon lequel la fente 45 s'étend en longueur.

Dans le mode réalisation présenté sur les figures 4 et 5, les axes longitudinaux 450 des fentes 45 sont avantageusement perpendiculaires aux axes longitudinaux 430 des rainures 43.

En pratique, chacune des fentes 45 est alors ménagée de sorte à s'étendre sur :
- au moins une partie de la largeur de l'au moins une bande d'appui 44, et
- au moins une partie de la largeur de l'une au moins des rainures 43 attenantes.

En l'espèce, l'une au moins des fentes 45 est ménagée de sorte à s'étendre sur :
- la largeur d'une première bande d'appui 44, et
- au moins une partie de la largeur des deux rainures 43 attenantes de la première bande d'appui 44, de préférence sur toute la largeur des deux rainures 43 attenantes.

Par exemple, comme représenté sur les figures 1, 4 et 5, les fentes 45 du revêtement 4 interceptent chacune deux rainures 43.

Cette fente 45 peut encore s'étendre sur une partie de la largeur des deux bandes d'appui 44 attenantes (ou juxtaposées) de la première bande d'appui.

Cette fente 45 s'étend par exemple sur environ 10 à 30 % de la largeur de la bande d'appui 44 attenante.

Par exemple, dans ce mode de réalisation, les fentes 45 sont disposées sur le revêtement 4 selon un motif régulier. Notamment, le motif formé par les fentes 45 sur le revêtement 4 est prévu pour qu'au moins une partie des fentes 45 coïncident au moins partiellement avec une ouverture 20 du sol caillebotis 2.

Par exemple, l'axe longitudinal 450 d'une fente 45 donnée coïncide avec l'axe longitudinal 23 de l'ouverture 20 avec laquelle elle forme un conduit d'évacuation.

La fente 45 et l'ouverture 20 s'étendent en longueur, selon une même direction.

De plus, de préférence, les fentes 45 présentent chacune un contour similaire au contour des ouvertures 20 du sol caillebotis 2.

Par exemple, ces contours peuvent être similaires en forme. De manière avantageuse, des dimensions des fentes 45 sont choisies pour diminuer le passage au travers des ouvertures 20 du sol caillebotis 2. Par exemple, une section des fentes 45, en largeur et/ou en longueur, est inférieure à la section des ouvertures 20 en largeur et/ou en longueur.

Cela permet avantageusement de générer moins d'émanations de gaz et d'être moins traumatisant pour les onglons, grâce à une augmentation de la surface d'appui, et donc, une diminution de la pression par cm².

De préférence, une cote en longueur des fentes 45 est inférieure par rapport à la cote en longueur des ouvertures 20 du sol caillebotis 2. Une cote en largeur des fentes 45 est, elle aussi, inférieure par rapport à la cote largeur des ouvertures 20 du sol caillebotis 2.

En particulier, de préférence, il est prévu que les fentes 45 soient rectilignes, de préférence avec un contour rectangulaire ou oblong.

Ce contour de fente 45 présente deux grands côtés 451 et deux petits côtés 452.

Les deux grands côtés 451 définissent la cote en largeur de la fente 45. Idéalement, ces grands côtés 451 sont parallèles à l'axe longitudinal 450 de la fente 45, et donc parallèles l'un à l'autre.

Les petits côtés 452 quant à eux définissent la cote en longueur de la fente 45.

Par exemple, les fentes 45 comportent les cotes suivantes :
- une largeur allant de 20 à 40 mm, et
- une longueur allant de 150 à 250 mm.

La profondeur des fentes 45 (correspondant à la distance entre la surface supérieure 41 et la surface inférieure 42) est égale à une épaisseur du revêtement 41.

Comme évoqué précédemment, les fentes 45 sont régulièrement réparties sur le revêtement 4, et forme un motif périodique au sein du revêtement 4. Avantageusement, ce motif est similaire au motif formé par les ouvertures 20 du sol caillebotis 2 placé sous le revêtement 4 afin de faciliter l'évacuation des liquides. En particulier, les fentes 45 sont disposées selon des lignes. Au sein d'une ligne, les grands côtés 451 des différentes fentes 45 sont alignés.

Ces lignes sont par exemple régulièrement espacées et parallèles. Au sein d'une même ligne, les fentes 45 sont par exemple régulièrement espacées les unes des autres. Avantageusement, les lignes formées par les fentes 45 du revêtement 4 coïncident avec les lignes formées par les ouvertures 20 du sol caillebotis 2.

De cette manière, les axes longitudinaux 450 des différentes fentes 45 du revêtement 4 sont parallèles les uns aux autres.

### Dispositif de fixation

Afin d'assurer l'évacuation des fluides, il est avantageux de maintenir les fentes 45 en vis-à-vis des ouvertures 20 du sol caillebotis 2. Pour cela, le positionnement du revêtement 4 doit être optimal et ses mouvements relatifs au sol caillebotis 2 doivent être limités.

Il est proposé dans le cadre de l'invention de maintenir le revêtement 4, par-dessus le sol caillebotis 2, grâce aux dispositifs de fixation 5. Ces dispositifs de fixation 5 assurent la solidarisation du revêtement 4 avec le sol caillebotis 2.

Ces dispositifs de fixation 5 sont disposés au sein du revêtement 4 et du sol caillebotis 2 (figures 4 à 8)
Selon l'invention, les dispositifs de fixation 5 comprennent chacun :
- un corps 51, destiné à être inséré dans le conduit d'évacuation et à maintenir le dispositif de fixation 5 solidaire du sol caillebotis 2, et
- une tête 56, venant en prise avec le revêtement 4.

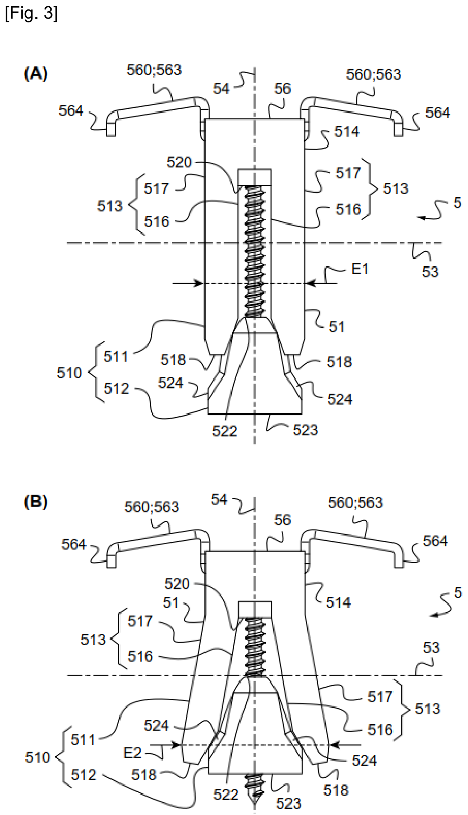

De manière générale, le corps 51 comprend des moyens de verrouillage 510 aptes à être manœuvré entre deux positions :
- une première position (figure 3A), qui correspond à une position de déblocage, dans laquelle le corps 51 est libre en translation sur la profondeur du conduit d'évacuation, et
- une seconde position (figure 3B), qui correspond à une position de blocage dans laquelle le corps 51 est verrouillé en translation sur la profondeur du conduit d'évacuation.

La tête 56 comprend quant à elle :
- des moyens de fixation 560, aptes à venir s'agripper à la surface supérieure 41 du revêtement 4, et
- des moyens de manœuvre 561, adaptés à la manœuvre des moyens de verrouillage 510 précités.

Plus particulièrement, le corps 51 du dispositif de fixation 5 est avantageusement de forme parallélépipèdique.

Par exemple, le corps 51 est réalisé dans un matériau élastiquement déformable, notamment choisi parmi les matériaux plastiques.

Par exemple, les moyens de verrouillage 510 consistent en de moyens de verrouillage 510 en expansion, manœuvrables entre la première position et la seconde position.

De préférence, les moyens de verrouillage 510 sont manœuvrables entre les deux positions suivantes ;
- la position de déblocage, définissant une première cote en largeur E1 du corps 51 du dispositif de fixation 5 qui autorise sa manœuvre en translation par rapport au conduit d'évacuation, et
- la position de blocage, définissant une seconde cote en largeur E2 du corps 51 du dispositif de fixation 5, supérieure à la première cote en largeur E1, adaptée à empêcher sa manœuvre en translation par rapport au conduit d'évacuation.

Pour cela, de préférence, les moyens de verrouillage 510 comprennent avantageusement :
- un élément de déformation 511, définissant avantageusement la cote en largeur ajustable, et
- un élément déformant 512, destiné à ajuster la cote en largeur de l'élément de déformation 511.

De préférence, l'élément de déformation 511 comprend deux aile 513 fixées à une base 514. Ainsi, l'élément de déformation 511 présente une section en forme de U, notamment visible sur la figure 3.

La base 514 coopère avec la tête 56 du dispositif de fixation 5. Cette base 514 comprend avantageusement un orifice traversant adapté au passage des moyens de manœuvre 561 décrits par la suite.

Par exemple, les deux ailes 513 sont parallèles l'une par rapport à l'autre lorsqu'aucune contrainte ne leur ait imposée.

Et les ailes 513 sont avantageusement adaptées à être élastiquement déformables en écartement, lorsqu'une force de déformation leur sont appliquées, selon la direction définie par un premier axe transversal 53. Ce premier axe transversal 53 définit encore la direction de déformation pour les ailes 513.

Chacune des ailes 513 comprend avantageusement une face interne 516 orientée vers l'autre aile 513, et une face externe 517 opposée à la face interne 516.

Un logement est défini par un espace libre entre les faces internes 516 des deux ailes 513. Ce logement s'ouvre ainsi à l'opposé de la base 514 et de la tête 56 du dispositif de fixation 5.

Une cote en largeur du logement est donnée par une distance entre les deux faces internes 516 des deux ailes 513 selon le premier axe transversal 53. Ce logement est configuré pour accueillir l'élément déformant 512 décrit par la suite.

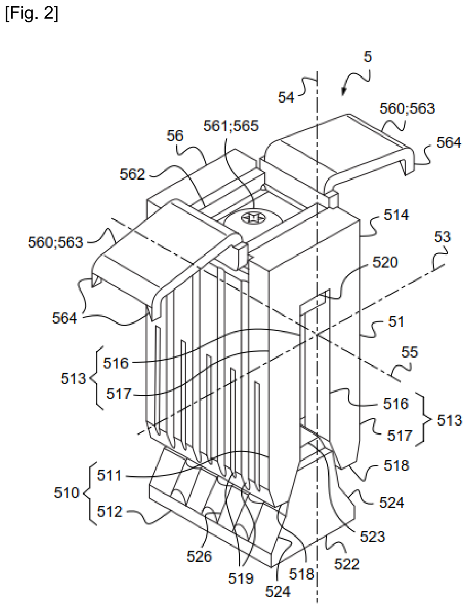

Le premier axe transversal 53 du dispositif de fixation 5, passant par ces faces opposées, est ici perpendiculaire aux ailes 513 (figures 2 et 3).

Chaque aile 513 comporte une épaisseur, définie par une cote entre la face interne 516 et la face externe 517.

La distance entre les faces externes 517 des aile 513 délimite la cote en largeur du corps 51 du dispositif de fixation 5 selon le premier axe transversal 53.

Les aile 513 s'étendent en longueur le long d'un axe longitudinal 54. Par exemple une longueur des ailes 513 (ou cote en longueur des ailes 513) est mesurée le long de l'axe longitudinal 54 entre la base 514 et une extrémité inférieure 518 de l'aile 513.

En particulier, la longueur des aile 513 est avantageusement prévue pour que la cote en longueur du corps 51 soit supérieure à la profondeur du conduit d'évacuation (c'est-à-dire supérieure à la somme de la profondeur de la fente 45 et de l'ouverture 20).

Une cote en longueur du logement est mesurée entre la base 514 et les extrémités inférieures 518 des ailes 513.

L'extrémité inférieure 518 des aile 513, à l'opposé de la base 514 et au niveau de la face interne 516, présente ici un chanfrein.

Ainsi sur la face intérieure, chaque face interne 516 présente ici une première surface parallèle à l'axe longitudinal 54, prolongée par un chanfrein inférieur, inclinée par rapport à l'axe longitudinal 54 et s'écartant en direction de la face externe 517.

Enfin, les aile 513 définissent encore un second axe transversal 55, perpendiculaire à l'axe longitudinal 54 et au premier axe transversal 53.

Par ailleurs, de manière avantageuse, les faces externes 517 des aile 513 présentent des sillons 519.

Les faces externes 517 présentent ainsi une combinaison de sillons :
- des sillons profonds, s'étendant sur toute la cote en longueur des aile 513, et
- des sillons superficiels, qui s'étendent depuis l'extrémité inférieure 518 des ailes 513, jusqu'à un milieu de la longueur des aile 513.

Grâce à ce système de sillons, le dispositif de fixation 5 est adapté à permettre le bon écoulement des fluides depuis la surface supérieure du revêtement 4, en agissant comme des rigoles. Du fait des sillons 519, les ailes 513 du dispositif de fixation 5 sont également adaptées à être déformées élastiquement sous l'action d'une force.

L'élément déformant 512, aussi appelé « coin », présente quant à lui, de manière avantageuse, une section de forme trapézoïdale selon le premier axe transversal 53.

Ce coin présente une première extrémité 522 et une seconde extrémité 523, reliées par des parois latérales 524.

Les parois latérales 524 sont divergentes, selon l'axe longitudinal 53. Dit autrement, ces parois latérales s'écartent l'une par rapport à l'autre.

Ces parois latérales 524 présentent ici chacune un profil comprenant une première surface légèrement inclinée par rapport à l'axe longitudinal 54, suivie d'une seconde surface plus fortement inclinée par rapport à l'axe longitudinal 54.

L'élément déformant 512 présente avantageusement les cotes suivantes :
- une première cote en largeur, mesurée au niveau de la première extrémité 522,
- une seconde cote en largeur, mesurée au niveau de la deuxième extrémité 523,

Les parois latérales 524 comprennent des sillons 526. De manière avantageuse, ces sillons 526 sont adaptés à être alignés dans le prolongement des sillons 519 profonds des aile 513 de l'élément de déformation 511.

Une hauteur du coin, selon l'axe longitudinal 54, est inférieure à la cote en hauteur du logement.

L'élément déformant 512 est traversé par un trou taraudé (non représenté). En particulier, l'orifice traversant de la base 514 et le trou taraudé de l'élément déformant 512 sont alignés et adaptés à coopérer avec une même vis.

Le coin est maintenu solidaire du reste du dispositif de fixation 5 par une vis 565, constitutive également des moyens de manœuvre 561.

Cette vis 565 est insérée par l'orifice traversant de la base 514, et un corps de la vis 556 est disposé dans le logement entre les deux aile 513.

Une extrémité inférieure de la vis 565 est vissée dans le trou taraudé par la première extrémité 522 du coin.

La tête 56 du dispositif de fixation 5 est placée au sommet du corps 51, par exemple, au niveau de sa base 514.

La tête 56 consiste par exemple en une pièce rapportée, réalisée par exemple dans un matériau métallique (par exemple en acier inoxydable) ou un matériau plastique ou encore en tout autre matériau dur et imputrescible.

Selon une variante de réalisation, la tête 56 (y compris les moyens de fixation 560, et en particulier les pattes 563) est réalisée monobloc avec le corps 51.

Ainsi, le trou traversant ménagé sur la base 514 traverse également la tête 56 du dispositif de fixation 5.

De manière avantageuse, la tête 56 présence un renforcement 562 venant se loger au sein de la base 514.

Ce renforcement 562 est adapté à recevoir la tête de la vis 565, pour limiter les contacts entre les onglons des animaux et des parties métalliques. En pratique, la tête 56 de vis 565 est noyée dans le renfoncement 562.

Cette tête de vis est manœuvrable depuis la tête 56 du dispositif de fixation 5, à l'aide d'un outil adapté.

La tête 56 comprend également des moyens de fixation 560. Ceux-ci prennent la forme de deux bras ou deux pattes 563, placés de part et d'autre de la base 514. Vue depuis la section transversale, les moyens de fixation 560 et le corps 51 prennent la forme d'un T, dont le corps 51 forme la hampe et les deux pattes 563, la barre.

En particulier, les pattes 563 sont ici disposées dans le prolongement du renfoncement 562. Les pattes 563 des moyens de fixation 560 s'étendent en longueur selon le premier axe transversal 53. Dit autrement ces pattes 563 sont orthogonales par rapport aux ailes513 du corps 51.

Chacune des pattes 563 présentent une cote en longueur mesurée depuis la base 514 jusqu'à une extrémité de la patte 563 (à l'opposé de la base 514).

Une largeur des pattes 563 est mesurée selon le second axe transversal 55.

L'extrémité de chaque patte 563 présente deux crochets 564, adaptés à se fixer dans le revêtement 4. Ces crochets 564 prennent la forme de deux pointes triangulaires.

Chaque patte 563 présente avantageusement une pente, descendante vers son extrémité et selon le premier axe transversal 53.

Les pattes 563 définissent ainsi avantageusement un V inversé, s'ouvrant vers le corps 51, pour favoriser leur ancrage dans le revêtement 4 par déformation élastique.

### Manœuvre du dispositif de fixation

Comme indiqué précédemment, les dispositifs de fixation 5 sont prévus pour s'agripper dans le revêtement 4 grâce aux moyens de fixation 560 dans leur tête 56, et pour bloquer une position du revêtement 4 par rapport au sol caillebotis 2, en se maintenant solidaire du conduit d'évacuation.

Pour cela, chaque dispositif de fixation 5 est prévu pour adopter deux positions, ou deux configurations.

Une première position, soit la position de déblocage, est représenté sur la figure 2 et la figure 3A.

Dans cette première position, le coin se situe à distance de la base 514.

En position de déblocage, l'élément déformant 512 est ici au sein du logement entre les ailes 513. En particulier, la première extrémité 522 du coin est insérée dans le logement au niveau des extrémités inférieures 518 des ailes. La première cote en largeur du coin est ainsi avantageusement inférieure à la largeur du logement. Dans la position de déblocage, les parois latérales 524 de l'élément déformant 512 reposent contre les faces internes 516 des parois 515 de chaque aile 513, sans exercer de contrainte sur les ailes 513.

La première cote en largeur E1 totale du corps 51 est mesurée selon le premier axe transversal 53, entre les faces externes 517 des ailes 513. Dans la première position, les ailes sont avantageusement parallèles l'une de l'autre.

La seconde position du dispositif de fixation 5 est représentée sur la figure 3B. Il s'agit de la position de blocage des moyens de verrouillage 510. Le passage d'une position à l'autre se fait à l'aide des moyens de manœuvre 561, c'est-à-dire, en l'état, en vissant ou en dévissant la vis 565 placée sur la tête 56 du dispositif de fixation 5.

En effet, la manœuvre de cette vis 565 au moins partiellement vissée dans le coin, va translater l'élément déformant 512 en hauteur et par rapport à la base 514, entre la première position et la seconde position.

Lors de cette translation de l'élément déformant 512 au sein du logement, les parois latérales 524 du coin viennent exercer une force de déformations sur les faces internes 516 des ailes 513.

Ces ailes 513, sous l'action de cette force de déformation s'écartent l'une par rapport à l'autre.

En particulier, ce mouvement de translation de l'élément déformant 512 le long du logement en direction de la base 514, génère une variation de la cote en largeur du corps 51. Dit autrement, la cote en largeur séparant les extrémités inférieures 518 des ailes 513 augmente.

Dans la seconde position, c'est-à-dire la position de blocage, la distance entre la première extrémité 522 de l'élément déformant 512 et le fond 520 du logement est diminué.

La deuxième cote en largeur E2 du corps 51 du dispositif de fixation 5 augmente dans la seconde position, du fait d'une augmentation de l'écartement des ailes.

### Procédé

La mise en place du système de revêtement 3 tel que décrit ci-dessus se fait selon un procédé comprenant les étapes suivantes :
- une étape de pose du revêtement 4 de sorte à recouvrir le sol caillebotis 2 et de sorte que les fentes 45 du revêtement 4 soient en communication fluidique avec au moins une ouverture 20 du sol caillebotis 2 pour former au moins un conduit d'évacuation,
- une étape d'insertion du dispositif de fixation 5 dans le conduit d'évacuation, avec ses moyens de verrouillage 510 en position de déblocage, de sorte à prendre en sandwich le revêtement 4 entre la tête 56 et le sol caillebotis 2, et
- une étape de manœuvre des moyens de verrouillage 510 du dispositif de fixation 5 depuis la position de déblocage vers la position de blocage.

Notamment, l'étape de pose consiste à faire coïncider les fentes 45 avec les ouvertures 20, de manière à former des conduits d'évacuation pour l'écoulement des liquides vers la fosse.

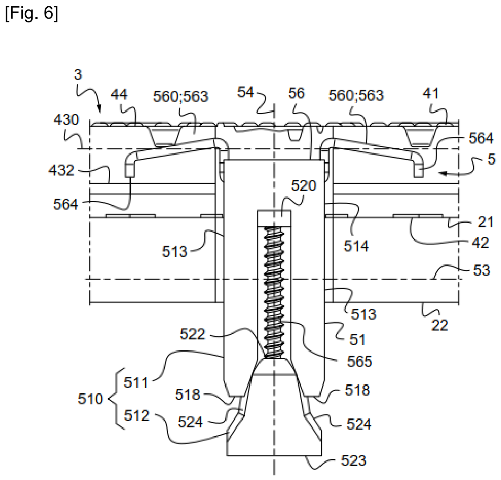

Lors de l'étape d'insertion des dispositifs de fixation 5 (figure 6), chaque dispositif de fixation 5 est avantageusement disposé de sorte que son axe longitudinal 54 sont orienté verticalement.

Il est par exemple prévu d'insérer une paire de dispositifs de fixation 5 sur au moins une partie des fentes 45 du revêtement 4.

Notamment, il est par exemple prévu une paire de dispositif de fixation 5 par fente 45 découpée dans le revêtement 4.

De manière alternative, il peut être décidé qu'au sein de chaque ligne, une paire de dispositifs de fixation 5 soit placé toutes les fentes 45 sur deux, ou toutes les fentes 45 sur trois, etc.

Durant cette étape d'insertion, les moyens de verrouillage 510 du dispositif de fixation 5 sont dans la position de déblocage.

Dans cette position de déblocage, le corps 51 du dispositif de fixation 5 a une première cote en largeur E1 adaptée à son insertion selon la profondeur du conduit d'évacuation, avantageusement sans user de force excessive et/ou d'outil.

En pratique, les aile 513 sont insérées au sein de la fente 45, marquant une entrée du conduit d'évacuation.

En particulier, lors de cette insertion, les faces externes 517 des ailes 513 sont orientées en regard des grands côtés 25 des ouvertures 20 et des grands côtés 451 des fentes 45.

Par ailleurs, la tête 56 des dispositifs de fixation 5 conforme à l'invention est prévue pour ne pas faire saillie par rapport aux bandes d'appui 44 du revêtement 4, une fois que le corps 51 est inséré dans une fente 45 (figures 4, 6 et 7).

Avantageusement, les moyens de fixation 560 de la tête 56 présentent des cotes en largeur et en hauteur adaptées à être logés dans les rainures 43 du revêtement 4, sans faire saillie par rapport aux bandes d'appui 44.

Par exemple, il est ici prévu que les pattes 563 présentent une largeur inférieure à une largeur de la rainure 43. De même, il est par exemple prévu que les pattes 563 présentent une hauteur inférieure à la profondeur des rainures 43.

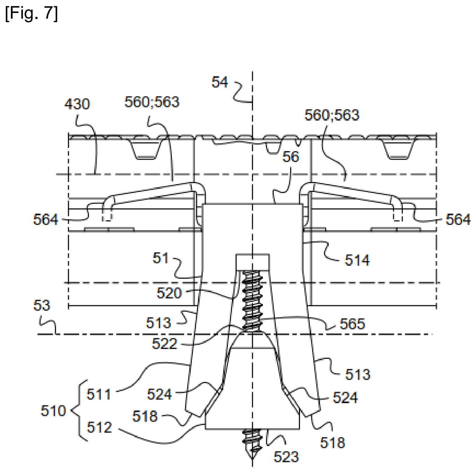

L'étape de manœuvre des moyens de verrouillage 510 permet de faire basculer les dispositifs de fixation 5 dans la position de blocage (figure 7).

De manière avantageuse, la manœuvre des moyens de manœuvre 561 est facilitée par plusieurs aspects du dispositif présenté.

En premier lieu, les moyens de manœuvre 561, ici, la vis 565, sont facilement accessibles depuis la surface supérieure 41 du revêtement 4.

De plus, les pattes 563 s'étendant en travers de la fente 45, permettent de maintenir le dispositif de fixation 5 sur la surface supérieure 41 du revêtement 4.

Enfin, le mouvement de vissage et de dévissage est facilité pour un opérateur, sans risquer de voir le dispositif de fixation 5 tourner. En effet, les pattes 563 installées dans les rainures 43, et la forme parallélépipédique du corps 51 inséré dans la fente 45 (épousant les dimensions de celle-ci), bloquent une possibilité de rotation du dispositif lorsqu'un mouvement de vissage ou dévissage est appliqué au moyen de manœuvre.

Par ailleurs, le fait d'encastrer la tête 56 du dispositif de fixation 5 dans une rainure 43 permet avantageusement d'empêcher une rotation du dispositif de fixation 5 pendant sa durée d'utilisation. Les pattes 563, avantageusement métalliques pour assurer une solidité de la fixation, sont ainsi en retrait par rapport aux bandes d'appui 44. Ceci est avantageux pour limiter le risque de blessure des animaux.

La vis 565 permet de translater l'élément déformant 512 au sein du logement, de sorte à progressivement écarter les aile 513 l'une par rapport à l'autre, au fur et à mesure que l'élément déformant 512 se rapproche de la tête 56 du dispositif.

Ainsi, dans la seconde position, le corps 51 du dispositif de fixation 5 présente de manière avantageuse une deuxième cote en largeur E2 supérieure à la cote en largeur de la fente 45, et par extension, du conduit d'évacuation. Le dispositif de fixation 5 est alors mécaniquement bloqué au sein de la fente 45.

Comme représenté sur la figure 7, dans la seconde position, les faces externes 517 des aile 513 poussées par l'élément déformant 512 s'écartent l'une par rapport à l'autre, car elles subissent une force de déformation. Cet écartement des aile 513 vient exercer une force verticale sur le revêtement 4.

En particulier, les faces externes 517 s'appuient sur un rebord inférieur de l'ouverture 20, avantageusement au niveau des deux grands côtés 25, de sorte à exercer la force verticale orientée vers la fosse. Cette force verticale permet également d'enfoncer les crochets 564 des moyens de fixation 560 dans le fond des rainures 43 du revêtement 4. Les moyens de fixation 560 viennent ainsi en prise avec le revêtement 4.

Ainsi, une fois que le dispositif de fixation 5 est dans sa seconde position, le revêtement 4 est pris en sandwich, c'est-à-dire rigidement maintenu entre les pattes 563 du dispositif de fixation 5 et le sol caillebotis 2.

Inversement, les dispositifs de fixation 5 selon l'invention ont également l'intérêt de pouvoir être démontés, par exemple en cas de remplacement du revêtement 4.

Il suffit pour cela à l'opérateur de manœuvrer les moyens de manœuvre 561 en sens inverse.

Là encore, les moyens de manœuvre 561 sont facilement accessibles depuis la surface supérieure 41 du revêtement 4. En outre, la déformation des pattes 563 étant élastique, les dispositifs de fixation 5 peuvent être extraits par rapport aux conduits d'évacuation.

Bien entendu, diverses autres modifications peuvent être apportées à l'invention dans le cadre des revendications annexées.

## Revendications

1. Système de revêtement (3) adapté à être fixé par-dessus un sol caillebotis (2) équipant une enceinte (1) pour l'élevage d'animaux,
lequel système de revêtement (3) comprend :
- un revêtement (4) destiné à recouvrir ledit sol caillebotis (2), avantageusement un tapis réalisé dans un matériau élastomère,
et
- une pluralité de dispositifs de fixation (5), destinés à assurer la solidarisation dudit revêtement (4) avec ledit sol caillebotis (2),
lequel revêtement (4) comporte :
- une surface inférieure (42), destinée à prendre appui sur ledit sol caillebotis (2), et
- une surface supérieure (41), opposée,
lequel revêtement (4) comprend plusieurs fentes (45), traversantes, destinées à venir en communication fluidique avec au moins une ouverture (20) ménagée dans ledit sol caillebotis (2), pour définir ensemble un conduit d'évacuation adapté à l'évacuation des liquides depuis ladite surface supérieure dudit revêtement (4),
le système étant **caractérisé en ce que** l'un au moins desdits dispositifs de fixation (5) comprend :
- un corps (51) adapté à être introduit en translation dans ledit conduit d'évacuation, depuis la surface supérieure (41) dudit revêtement (4), et
- une tête (56), comprenant des moyens de fixation (560) adaptés à une fixation sur la surface supérieure (41) dudit revêtement (4),
lequel corps (51) comprend des moyens de verrouillage (510) aptes à être manœuvrés entre deux positions :
- une position de déblocage, adaptée à autoriser la translation dudit corps (51) par rapport audit conduit d'évacuation, et
- une position de blocage, adaptée à empêcher la translation dudit dispositif de fixation (5) rapporté dans ledit conduit d'évacuation,
laquelle tête (56) comprend des moyens de manœuvre (561), adaptés à la manœuvre desdits moyens de verrouillage (510) entre lesdites deux positions.

2. Système de revêtement (3) selon la revendication 1, dans lequel la surface supérieure du revêtement (4) comportant plusieurs rainures (43) longitudinales adaptées à recevoir les liquides s'écoulant sur ladite surface supérieure (41),
lesquels rainures (43) longitudinales sont coupées par lesdites fentes (45),
lesquelles moyens de fixation (560) de la tête (56) sont adaptés à être logés dans lesdites rainures (43), avantageusement sans faire saillie par rapport à ladite surface supérieure (41),
de préférence, la cote en largeur desdits moyens de fixation (560) est inférieure à la cote en largeur de ladite rainure (43) longitudinale, et
de préférence, les rainures (43) longitudinales s'étendent perpendiculairement par rapport auxdits fentes (45).

3. Système de revêtement (3) selon l'une quelconque des revendications 1 ou 2, dans lequel les moyens de fixation (560) de la tête (56) comprennent deux pattes (563) s'étendant de part et d'autre dudit corps (51) et adaptées à s'ancrer au niveau de ladite surface supérieure du revêtement (4), de part et d'autre de la fente (45), le cas échéant dans ladite rainure (43) longitudinale,
lesquelles pattes (563) comportent avantageusement au moins un crochet (564) apte à s'enfoncer dans le revêtement (4).

4. Système de revêtement (3) selon l'une quelconque des revendications 1 à 3, dans lequel la tête (56) du dispositif de fixation (5) comporte un renfoncement (562) dans lequel sont accessibles les moyens de manœuvre (561) du dispositif de fixation (5).

5. Système de revêtement (3) selon l'une quelconque des revendications 1 à 4, dans lequel les moyens de manœuvre (561) comprennent :
- une tête de vis (565) qui est accessible depuis la tête (56) du dispositif de fixation (5), et
- un corps de vis (565) qui coopère avec lesdits moyens de verrouillage (510).

6. Système de revêtement (3) selon l'une quelconque des revendications 1 à 5, dans lequel lesdits moyens de verrouillage (510) consistent en des moyens de verrouillage (510) en expansion,
lesquels moyens de verrouillage (510) sont manœuvrables entre lesdites deux positions :
- ladite position de déblocage, définissant une première cote en largeur (E1) autorisant sa manœuvre en translation par rapport audit conduit d'évacuation, et
- ladite position de blocage, définissant une seconde cote en largeur (E2), supérieure à ladite première cote en largeur (E1), adaptée à empêcher sa manœuvre en translation par rapport audit conduit d'évacuation.

7. Système de revêtement (3) selon la revendication 6, dans lequel les moyens de verrouillage (510) en expansion comprennent un élément de déformation (511) comprenant deux aile (513) déformables élastiquement, en écartement, qui s'étendent de part et d'autre d'un axe longitudinal (55) et définissant un logement s'ouvrant à l'opposé de ladite tête (56),
lequel logement reçoit un élément déformant (512) qui est manœuvrable au sein dudit logement pour ajuster l'écartement desdites deux aile (513) de l'élément de déformation (511).

8. Système de revêtement (3) selon la revendication 7, dans lequel les aile (513) et/ou l'élément déformant (512) présentent une forme évasée,
lequel élément déformant (512) est manœuvrable en translation le long dudit logement pour définir lesdites positions.

9. Dispositif de fixation (5) pour un système de revêtement (3) selon l'une quelconque des revendications 1 à 8, comprenant :
- un corps (51) adapté à être introduit en translation dans ledit conduit d'évacuation, depuis la surface supérieure (41) dudit revêtement (4), et
- une tête (56), comprenant des moyens de fixation (560) adaptés à une fixation sur la surface supérieure (41) dudit revêtement (4),
lequel corps (51) comprend des moyens de verrouillage (510) aptes à être manœuvrés entre deux positions :
- une position de déblocage, adaptée à autoriser la translation dudit corps (51) par rapport audit conduit d'évacuation, et
- une position de blocage, adaptée à empêcher la translation dudit corps (51) par rapport audit conduit d'évacuation,
laquelle tête (56) comprend des moyens de manœuvre (561), adaptés à la manœuvre desdits moyens de verrouillage (510) entre lesdites deux positions.

10. Enceinte (1) pour l'élevage d'animaux comprenant un sol caillebotis (2) recevant un système de revêtement (3) selon l'une quelconque des revendications 1 à 8.

11. Procédé de mise en place d'un système de revêtement (3) selon l'une quelconque des revendications 1 à 8,
lequel procédé comprenant les étapes suivantes :
- une étape de pose du revêtement (4) de sorte à recouvrir le sol caillebotis (2) et de sorte que les fentes (45) dudit revêtement (4) soient en communication fluidique avec au moins une ouverture (20) dudit sol caillebotis (2) pour former un conduit d'évacuation,
- une étape d'insertion dudit dispositif de fixation (5) dans ledit conduit d'évacuation, avec ses moyens de verrouillage (510) en position de déblocage, de sorte à prendre en sandwich ledit revêtement (4) entre la tête (56) et le sol caillebotis (2), et
- une étape de manœuvre desdites moyens de verrouillage (510) du dispositif de fixation (5) depuis ladite position de déblocage vers ladite position de blocage.
